# EUROPÄISCHE PATENTSCHRIFT

(11) **EP 2 083 641 B1**
(45) Veröffentlichungstag und Bekanntmachung des Hinweises auf die Patenterteilung: **17.08.2011**
(21) Anmeldenummer: 07819777.9
(22) Anmeldetag: 13.11.2007
(51) Int. Cl.: A23L 1/308, A23L 1/0534, A23K 1/12, A23K 1/14

(54) **BALLASTSTOFF**
ROUGHAGE
FIBRE ALIMENTAIRE

(30) Priorität: 13.11.2006 AT 18752006
(43) Veröffentlichungstag der Anmeldung: 05.08.2009
(73) Patentinhaber: Neufeld, Klaus, 2532 Heiligenkreuz (AT); Grabherr, Helmut, 4550 Kremsmünster (AT); Westerkamp, Arnold, 49429 Visbek (DE)
(72) Erfinder: Neufeld, Klaus, 2532 Heiligenkreuz (AT)
(74) Vertreter: Puchberger, Peter
(86) Internationale Anmeldenummer: PCT/EP2007/009791
(87) Internationale Veröffentlichungsnummer: WO 2008/058698

(56) Entgegenhaltungen:
- EP-A- 0 007 136
- EP-A- 0 421 758
- EP-A- 1 542 545
- EP-A2- 0 409 359
- WO-A-92/02148
- AT-B- 398 685
- DE-A1- 2 849 341
- DE-A1- 10 114 341
- FR-A- 2 627 668
- US-A- 5 705 216
- LEIBETSEDER J ET AL: "Crude fiber dietary fiber" KRAFTFUTTER - FEED MAGAZINE, FRANKFURT, DE, Bd. 89, Nr. 10, 2006, Seiten 24-28, XP008089625 ISSN: 0023-4427
- DATABASE CAPLUS [Online] CHEMICAL ABSTRACTS SERVICE, COLUMBUS, OHIO, US; XP002473618 gefunden im STN Database accession no. 200:600110 & JP 2000 232855 A (KAO CORP.) 29. August 2000 (2000-08-29)

## Beschreibung

Die Erfindung bezieht sich auf Zusatzstoffe für die tierische und menschliche Ernährung, insbesondere auf Ballaststoffe.

Ballaststoffe sind für die menschliche und tierische Gesundheit, die Verdauungsstabilität und das Wohlbefinden von unbestrittener Bedeutung. Im Bereich der Nutztierernährung wurde dieses Wissen im Rahmen einer EU Richtlinie, die am 4. August 2006 in Kraft getreten ist, umgesetzt [für Bundesrepublik Deutschland: Bundesgesetzblatt Jahrgang 2006 Teil I Nr. 37 §25(6)]. Im Alleinfutter für trächtige Jungsauen und Sauen ist somit ein Rohfasergehalt von mindestens 8% in der Trockenmasse vorgeschrieben. Auf jeden Fall ist bei der Fütterung der Tiere bis eine Woche vor dem Abferkeltermin darauf zu achten, dass eine Rohfaseraufnahme von mindestens 200 g pro Tag gewährleistet ist.

Der umgangssprachlich gebrauchte Ausdruck "Battaststoffe" ist einigermaßen problematisch. Erstens weil es sich bei den so bezeichneten Futterbestandteilen keineswegs um nutzlosen Ballast handelt, wie der Ausdruck suggeriert, und zweitens, weil es sich dabei um eine komplexe Stoffgruppe mit mannigfaltigen physiologischen Wirkungen handelt. Gemeinsam haben sie, dass sie den Dünndarm unverdaut passieren. Alle Ballaststoffe sind Polysaccharide mit Ausnahme von Lignin, einem Polymer von Phenylpropan. Die Definition und weitere Einteilung der Ballaststoffe ist allerdings widersprüchlich. Nach "biologischer" Definition handelt es sich um Kohlenhydrate, welche im Dünndarm nicht enzymatisch abgebaut werden und folglich den Dickdarm erreichen, plus Lignin. Bei dieser Definition ist auch jener Stärkeanteil einbezogen, der im Dünndarm nicht enzymatisch abgebaut wird *(resistant starch),* von der Dickdarmflora fermentiert wird und somit im Dickdarm eine biologische Wirkung entfaltet. Eine "chemische" Definition lautet: Ballaststoffe sind *non starch polysaccharides* (deutsch Strukturkohlenhydrate genannt) plus Lignin. Die letztgenannte Definition bezieht die resistente Stärke nicht mit ein, was zur Folge hat, dass die Effekte jenes Stärkeanteils, der in das Colon übertritt, unberücksichtigt bleiben.

Betrachtet man ihre Herkunft, so kann man Ballaststoffe einteilen in: a) Fasern, die der Aufrechterhaltung der Pflanzenstruktur dienen, b) pflanzliche Schleimstoffe und c) Speicherpolysaccharide. Ballaststoffe tierischer Herkunft, wie etwa Cutin, sind praktisch bedeutungslos. Die Tatsache, dass Ballaststoffe zum Teil fasrige Struktur haben, hat zu den ebenfalls für diese Stoffgruppe benutzten Bezeichnungen Pflanzenfasern, Faserstoffe sowie zu der im englischen Sprachraum zunehmend populären Bezeichnung *dietary fiber* geführt. Leider sind auch diese Begriffe irreführend, da, wie aus obiger Aufzählung hervorgeht, nicht alle Ballaststoffe Faserstruktur aufweisen. Weiter erwähnenswert ist der Begriff Rohfaser, unter dem im Zuge der Weender Analyse verschiedene in verdünnten Säuren und Laugen unlösliche Gerüststoffe zusammengefasst werden. Der Rohfaseranteil liegt meist deutlich unter dem Ballaststoffanteil, wobei die Relation dieser beiden Werte je nach Futtermittelzusammensetzung schwankt. Für das Verständnis der physiologischen Wirkung ist eine Einteilung in lösliche/unlösliche sowie in leicht fermentierbare/schwer bis überhaupt nicht fermentierbare Ballaststoffe sinnvoll.

Die häufigsten Ballaststoffkomponenten sind Cellulose, Hemicellulosen, Lignin, Inulin, Fructooligosaccharide und pflanzliche Hydrokolloide.

Cellulose ist der charakteristische Bestandteil pflanzlicher Zellwände und bestimmt weitgehend deren Bau. Sie ist das meistverbreitete Makromolekül auf der Erde. Die Cellulose ist ausschließlich aus 1,4-verknüpften β-Glucose-Einheiten aufgebaut, es handelt sich um ein hochpolymeres Polysaccharid mit unverzweigter, kettenförmiger Molekülstruktur. Cellulose ist wasserunlöslich und weist hohes Wasserbindungsvermögen auf.

Hemicellulosen sind aus Pentosen (Arabinose, Xylose) und Hexosen (Glucose, Mannose, Galactose) bestehende Polysaccharide. Die Grundstruktur von Hemicellulosen bilden Kettenmoleküle, die im Unterschied zur Cellulose meist kurze Seitenketten aus verschiedenen Zuckern oder Zuckersäureresten aufweisen oder auch leicht verzweigt sein können. Ihre hohen Gehalte an hydrophilen Gruppen erklären die starke Quellbarkeit.

Lignin ist ein dreidimensionales Makromolekül, das aus Phenylpropan-Einheiten zu einer polymeren Verbindung aufgebaut ist. Lignin hat wesentlich weniger polare Gruppen als die Polysaccharide und ist daher hydrophob und nicht wasserlöslich.

Aufgrund des hohen Wasserbindungsvermögens von Cellulose und Hemicellulosen erhöhen diese den Volumenreiz im Darm, wodurch die Peristaltik angeregt und die Dickdarmpassage beschleunigt wird. Somit wirken sie Verstopfungen entgegen.

Inulin und Fructooligosaccharide sind Polysaccharide, die von vielen Pflanzen als Reservestoffe gebildet werden. Inulin und Fructooligosaccharide sind wasserlöslich.

Auch pflanzliche Hydrokolloide, wie z.B. Pektin und Johannisbrotkernmehl, zählen zur Gruppe der Ballaststoffe. Sie sind wasserlöslich, Gelbildner und bewirken als solche eine Viskositätserhöhung des Nahrungsbreis. Durch die Viskositätserhöhung kommt es vermutlich zu einer Verlangsamung der Magen- und Dünndarmpassage.

Fermentierbare Ballaststoffe, wie beispielsweise Inulin, Fructooligosaccharide und Pektin, werden im Colon rasch und fast vollständig bakteriell abgebaut, da sie der Darmflora als Nahrung dienen. Dabei entstehen kurzkettige Fettsäuren, überwiegend Essigsäure, Propionsäure und Buttersäure, die positive Auswirkungen auf den Verdauungstrakt und die tierische Gesundheit insgesamt haben. Diese kurzkettigen Fettsäuren senken den pH-Wert der Ingesta, dadurch kommt es zu einer Stabilisierung der Dickdarmflora, eine bakterielle Abwanderung von pathogenen Keimen in Bereiche des Dünndarms wird verhindert und Durchfallerkrankungen wird somit vorgebeugt. Außerdem stimulieren diese kurzkettigen Fettsäuren die Natrium- und Wasserrückresorption aus dem Colon. Das ist ein weiterer Mechanismus, der prophylaktisch gegen Durchfall wirksam ist. Die gebildete Buttersäure dient den Schleimhautzellen des Dickdarms als Energie lieferndes Substrat, die Schleimhaut wird somit in ihrer Regenerationsfähigkeit gefördert und gesunderhalten. Durch die beschriebene pH-Wert-Senkung und den Einfluss auf die Darmflora wird die Konzentration von Ammoniak im Dickdarm gesenkt. Dies ist von großer Bedeutung für die Darmgesundheit, da es sich bei Ammoniak um ein hochgiftiges Stoffwechselprodukt handelt, das Entzündungen und Zellschäden verursacht und zu einer nachhaltigen Schädigung des Darmepithels führen kann. Die schädliche Wirkung des Ammoniaks beschränkt sich außerdem nicht auf den Darmtrakt, Ammoniak gelangt in den gesamten Organismus und kann so auch andere Organe schädigen. Erwähnenswert ist auch, dass die beim Fermentationsprozess entstandenen kurzkettigen Fettsäuren in die Blutbahn gelangen und dem Tier als zusätzlich verwertbare Energie zur Verfügung stehen.

Ballaststoffe sind generell von großer praktischer Bedeutung sowohl für die tierische als auch die menschliche Ernährung. Üblicherweise wird angenommen, dass Ballaststoffe die Passagezeit im Verdauungstrakt beschleunigen. Dies gilt jedoch nur für den Bereich des Dickdarms, wohingegen im Magen und Dünndarm die Passagezeit nicht beeinflusst oder sogar verlängert wird. Sowohl für lösliche als auch für unlösliche Ballaststoffe ist beschrieben, dass sie die Entleerungsfrequenz des Magens vermindern können. In der wissenschaftlichen Literatur wird diskutiert, dass dies einen positiven Effekt auf die Proteinverdauung durch eine längere Einwirkdauer von Magensäure und Enzymen hat.

Für die Aufrechterhaltung eines gesunden Darmmilieus ist die Kombination von fermentierbaren und weniger fermentierbaren Ballaststoffen von Bedeutung.

In der Praxis, insbesondere in der Tierernährung, häufig eingesetzte Rohfaserträger sind Weizenkleie, Trockenschnitte, Grünmehle und Rohfaserprodukte aus Lignocellulose.

Weizenkleie zeichnet sich durch ihren geringen Energiegehalt bei relativ hohem Rohfasergehalt aus. Der Anteil an bakteriell fermentierbaren Ballaststoffen ist ebenfalls hoch. Durch ihren hohen Phosphorgehalt bei geringem Calciumgehalt eignet sich Weizenkleie z.B. bei Sauen in der Geburtsvorbereitungsphase als Rohfaserträger zur Unterstützung der MMA-Prophylaxe (i.e. Mastitis-Metritis-Agalaktie-Prophylaxe). Allerdings kann Weizenkleie in hohem Maß mykotoxinbelastet sein, was bekannterweise zu gesundheitlichen Problemen führen kann.

Auch Trockenschnitte verfügt über einen hohen Rohfasergehalt und großen Anteil an bakteriell fermentierbaren Ballaststoffen. Der durch Trockenschnittenfütterung bei Schweinen verursachte feuchte, schmierige Kot sowie der hohe Calciumgehalt, der durch eine Erhöhung des Ham-pH-Wertes Harnwegsinfektionen und somit ein MMA-Geschehen begünstigt, wirken sich nachteilig in der Geburtsvorbereitung aus. Der Einsatz der Trockenschnitte in größeren Mengen ist daher bei Zuchtsauen etwas problematisch.

Grünmehle haben einen geringen Energie- bei hohem Rohfasergehalt und hohem Anteil an bakteriell fermentierbaren Ballaststoffen. Eine Belastung durch Mykotoxine ist möglich.

In letzter Zeit haben sich Rohfaserprodukte aus Lignocellulose in der Nutztieremährung bewährt. Unter Lignocellulose versteht man Cellulose und Hemicellulosen mit Lignineinlagerung, d.h. es handelt sich um verholztes pflanzliches Material. Die Vorteile dieser Produkte sind der standardisierte Rohfasergehalt, dass sie frei von Mykotoxinen sind und die thermische Hygienisierung im Produktionsprozess.

Der Einsatz dieser Rohfaserprodukte hat sich bereits in der Sauenfütterung bewährt. Ein hoher Rohfasergehalt führt zu einem guten Sättigungsreiz, was in der Folge einen beruhigenden Einfluss auf das Verhalten der Tiere hat. Gut dokumentiert ist auch, dass diese Rohfaserprodukte aus Lignocellulose aufgrund der beschleunigten Dickdarmpassage vorbeugend gegen Obstipation wirken und somit wesentlich zu einer MMA-Prophylaxe beitragen, ohne die Tiere dem Risiko einer Mykotoxinbelastung - wie bei anderen Rohfaserträgern möglich - auszusetzen.

Der Einsatz von Holz- oder Holzmehlen in der Tierernährung ist bekannt. In EP 1 542 545 B1 ist ein Futtermittelzusatz, der aus einem sogenannten Rohfaserkonzentrat von "autfibrillierter" Lignocellulose besteht, geoffenbart, es findet sich jedoch kein Hinweis auf eine lignocellulosehaltige Faserformulierung, die eine Kombination von fermentierbarer Fasersubstanz mit schwer/nicht fermentierbarer Fasersubstanz enthält. Die Verwendung von Cellulosefibrillen in Futtermitteln ist in der EP 0 819 787 A2 beschrieben.

Aus US 6 087 092 ist eine Zusammensetzung zur Behandlung von Erkrankungen des Magen-Darm-Trakts bekannt, die als Ballaststoff Arabinogalactan, das aus Holz eines Baums der Gattung *Larix* mit warmem Wasser extrahiert wird, und ein Polyphenol aufweist.

Maurizio, A., "Einige Mehle und Brote aus Hungergegenden Russlands", in: Zeitschrift f. Untersuchung d. Nahr.- u. Genussmimel, 1901, Vol. 41, S. 1017-1020, beschreibt die Verwendung von Kiefemrindenmehl als Zusatz zu Getreidemehlen bei der Herstellung von Brot. Kosti Pajar, M., "Untersuchung über das Kiefemrindenöl l", in: Fette und Seifen, 1943, Vol. 10, S. 465-471, beschreibt die Verwendung der Innenrinde der Kiefer, d.h. des einen hohen Kohlenhydratanteil aufweisenden Kambiums, als Notnahrungsmittel.

Aus EP 0 409 359 ist ein Nahrungsmittelzusatz aus modifizierter pflanzlicher Faser bekannt, die durch Entlignifizieren eines nicht von Holz stammenden lignocellulosehattigen Substrats erhalten wird.

Die derzeit vermarkteten Rohfaserprodukte auf Basis von Lignocellulose bestehen aus unlöslichen, schwer fermentierbaren Ballaststoffen. Aus ernährungsphysiologischer Sicht ist jedoch die Verwendung einer Kombination von schwer oder nicht fermentierbaren und fermentierbaren Ballaststoffen wichtig. Fermentierbare Ballaststoffe führen im Darm zur Bildung organischer Säuren, insbesondere Milchsäure, sowie flüchtige Fettsäuren, wobei vor allem die Buttersäure von wesentlicher Bedeutung für den Stoffwechsel der Darmzotten und für die Wasserrückresorption im Darm ist. Eine überhöhte Gabe fermentierbarer Faserstoffe (Ballaststoffe) führt jedoch zu einer Verschlechterung der Kotkonsistenz und zu einer nicht unerheblichen Gasbildung im Darmlumen. Eine vermehrte Gasbildung ist bei Nutztieren aus energetischer Sicht ungünstig, da es dadurch zu einem Verlust von Energie kommt.

Eine auf die Stoffwechselaktivität oder die Verdauungsgesundheit des Organismus optimale Wirkung kann also weder durch den alleinigen Einsatz fermentierbarer noch durch den alleinigen Einsatz schwer oder nicht fermentierbarer Fasersubstanz als Ballaststoff erreicht werden, sondern bedarf einer ausgewogenen Kombination dieser Bestandteile.

Die Erfindung schlägt einen verbesserten Ballaststoff vor, der aus einer lignocellulosehaltigen Faserformulierung besteht, die einen Anteil an im Verdauungstrakt fermentierbarer und einem Anteil an im Verdauungstrakt schwer oder nicht fermentierbarer Fasersubstanz in einen Verhältnis zwischen 1:100 und 100:1 enthält, wobei die Faserformulierung
- schwer oder nicht fermentierbare Fasersubstanz, die aus Weichholz, Hartholz und Mischunger davon ausgewählt ist, und
- fermentierbare Fasersubstanz, die aus Rindenmaterial von Weichhölzern, Rindenmaterial von Harthölzern oder Mischungen davon ausgewählt ist, enthält.

Unter im Verdauungstrakt fermentierbarer Fasersubstanz versteht man Fasersubstanzen, die im Verdauungstrakt unter Bildung von Säuren teilweise oder vollständig mikrobiell abgebaut werden. Unter im Verdauungstrakt schwer oder nicht fermentierbarer Fasersubstanz versteht man Fasersubstanzen, die bei Tieren mit einhöhligem Magen (Monogastrier) und beim Menschen nicht oder nur schwer oder langsam im Verdauungstrakt mikrobiell abgebaut werden. In Fachkreisen geht man üblicherweise davon aus, dass schwer oder nicht fermentierbare Fasersubstanzen unlöslich sind, während leicht fermentierbare Fasersubstanzen löslich sind.

Es kann erfindungsgemäß vorgesehen sein, dass das lignocellulosehaltige Material in unverarbeiteter Form oder in verarbeiteter Form eingesetzt wird. Das lignocellulosehaltige Material kann erfindungsgemäß in gereinigter und aufbereiteter Form eingesetzt werden.

Der Ballaststoff kann ein lignocellulosehaltiges Material enthalten, das aus einem Anteil an im Verdauungstrakt fermentierbarer und einem Anteil an im Verdauungstrakt schwer oder nicht fermentierbarer Fasersubstanz aufgebaut ist.

Als fermentierbare Fasersubstanz sind Rinden von Weichhölzem und Rinden von Harthölzern zu nennen. Als bevorzugte Rindenmaterialien kann man beispielsweise jene von Kiefernarten *(Pinus spp.)* nennen.

Als fermentierbare Faserkomponente können noch andere Rohstoffe eingesetzt werden, die im Verdauungstrakt gut fermentierbar sind, wie beispielsweise Oligosaccharide, Pektine, Inulin und Pflanzenmaterial, das diese fermentierbaren Fasersubstanzen enthält, wie beispielsweise Zichorie, Topinambur etc.

Weiters kann der Ballaststoff Rindenmaterial enthalten, das aus der aus Rindenmaterial von Weichhölzern, Rindenmaterial von Harthölzern oder deren Mischungen bestehenden Gruppe ausgewählt ist. Ein bevorzugter Ballaststoff kann Rindenmaterial von Kiefernarten enthalten.

Der Ballaststoff kann Lärchenholz enthalten.

Gemäß einem Merkmal der Erfindung kann vorgesehen sein, dass der erfindungsgemäße Ballaststoff Lärchenholz und Rindenmaterial von Weichhölzem und/oder Rindenmaterial von Harthölzern enthält. Ein bevorzugter erfindungsgemäßer Ballaststoff kann Rindenmaterial von Kiefernarten und Lärchenholz enthalten.

Als Rohstoffe mit vor allem unfermentierbarer Fasersubstanz kann man im Rahmen der vorliegenden Erfindung Hart- und Weichhölzer nennen, aber auch alle anderen Pflanzenbestandteile mit einem Gehalt an schwer oder nicht fermentierbarer Pflanzenfaser (Lignocellulose, wie beispielsweise Schilf, Stroh etc.).

Gemäß einem weiteren Merkmal der Erfindung kann vorgesehen sein, dass der Ballaststoff mindestens ein aus der aus Weichholz, Hartholz und deren Mischungen bestehenden Gruppe ausgewähltes Holz und mindestens ein aus Rindenmaterial von Weichhölzern, Rindenmaterial von Harthölzern und deren Mischungen bestehenden Gruppe ausgewähltes Rindenmaterial enthält.

Gemäß einem weiteren Merkmal der Erfindung kann vorgesehen sein, dass der Ballaststoff ein aus der aus Fichtenholz (*Picea spp*.), Kiefernholz (*Pinus spp*.), Lärchenholz (*Larix spp*.) und deren Mischungen bestehenden Gruppe ausgewähltes Weichholz und ein aus der aus Rindenmaterial von Weichhölzern, Rindenmaterial von Harthölzern und deren Mischungen bestehenden Gruppe ausgewähltes Rindenmaterial enthält.

Gemäß einem weiteren Merkmal der Erfindung kann vorgesehen sein, dass der Ballaststoff ein aus der aus Fichtenholz, Kiefernholz, Lärchenholz und deren Mischungen bestehenden Gruppe ausgewähltes Weichholz und ein Rindenmaterial von Kiefernarten enthält.

Gemäß einem weiteren Merkmal der Erfindung kann vorgesehen sein, dass der Ballaststoff ein aus der aus Rindenmaterial von Weichhölzern, Rindenmaterial von Harthölzern und deren Mischungen bestehenden Gruppe ausgewähltes Rindenmaterial und mindestens ein Hartholz enthält. Erfindungsgemäß können beispielsweise Buche (*Fagus spp*.), Pappel (*Populus spp*.), Birke (*Betula spp*.) und dergleichen in der Hartholzkomponente verwendet werden. Gemäß einer bevorzugten Ausführungsform der Erfindung enthält der Ballaststoff beispielsweise Rindenmaterial von Koniferenarten und ein aus der aus Buche, Pappel, Birke und deren Mischungen ausgewähltes Hartholz.

Gemäß einer besonders bevorzugten Ausführungsform der Erfindung kann der Ballaststoff eine Mischung von Rindenmaterial, vorzugsweise Kiefernrinde, mit Lärchenholz und mindestens einem weiteren Weichholz, insbesondere Fichtenholz und/oder Kiefernholz, enthalten.

Gemäß einer weiteren besonders bevorzugten Ausführungsform der Erfindung kann der Ballaststoff eine Mischung von Rindenmaterial, vorzugsweise Kiefernrinde, mit einer Mischung aus Kiefernholz und Fichtenholz enthalten.

Gemäß einem weiteren Merkmal der Erfindung kann vorgesehen sein, dass der Ballaststoff Isochinolinalkaloide, insbesondere Benzophenanthridinalkaloide, enthält. Die Alkaloide können in Form von Pflanzenmaterialien, wie Rhizomen, Blätter, Stängel und dergleichen, enthalten sein.

Beispielsweise können für die vorliegende Erfindung Pflanzenmaterialien von Papaveraceae verwendet werden. Als besonders bevorzugte Pflanzen kann man beispielsweise *Sanguinaria canadensis, Macleaya cordata, Chelidonium majus, Hydrastis canadensis* etc. nennen. Die Papaveraceae enthalten Isochinolinalkaloide, insbesondere Benzophenanthridinalkaloide, wie beispielsweise Sanguinarin und Chelerythrin.

Erfindungsgemäß können auch Extrakte aus Pflanzenmaterialien, wie beispielsweise der *Sanguinaria canadensis* oder der *Macleaya cordata* oder aus anderen Papaveraceae, enthalten sein. Gemäß einer bevorzugten Ausführungsform der Erfindung werden Extrakte aus der *Macleaya cordata* eingesetzt.

Erfindungsgemäß geeignete Extrakte aus Pflanzenmaterialien können nach jedem bekannten Extraktionsverfahren erhalten werden, wie beispielsweise wässrige Extraktion, alkoholische Extraktion, CO₂-Extraktion und dergleichen.

Erfindungsgemäß können in dem Ballaststoff auch Salze oder Derivate isolierter Isochinolinalkaloide oder ihre synthetischen Analoga enthalten sein.

Der erfindungsgemäße Ballaststoff enthält vorzugsweise Benzophenanthridinalkaloide, insbesondere Sanguinarin und Chelerythrin, wobei die Dosierung von Sanguinarin beispielsweise zwischen 0,00001 Gew.-% und 50 Gew.-%, bezogen auf das Gesamtgewicht des Ballaststoffes, variieren kann. Gemäß einer bevorzugten Ausführungsform kann das Verhältnis von Sanguinarin zu Chelerythrin etwa 2:1 betragen.

Benzophenanthridinalkaloide sind beim Tier für ihre leistungssteigernde und appetitfördernde Wirkung bekannt. Überraschenderweise konnte mit einem alkaloidhaltigen Ballaststoff gemäß der vorliegenden Erfindung eine weitere Erhöhung des Sättigungsreizes erreicht werden. Dieser Effekt ist insbesondere bei Zuchtsauen von Bedeutung. Er ist auch bei anderen Tieren von Interesse, insbesondere bei Hund und Katze, bei denen der erfindungsgemäße Ballaststoff zur Dämpfung des Appetites insbesondere im Zusammenhang mit der Prophylaxe und Behandlung von Adipositas eingesetzt werden kann. Aber auch beim normalgewichtigen Haustier, das oft durch Appetenz nach Nahrung (Bettelverhalten) für den Tierbesitzer sehr lästig werden kann, ist der erfindungsgemäße Ballaststoff erfolgreich einzusetzen.

Die vorliegende Erfindung betrifft auch ein Verfahren zur Herstellung eines erfindungsgemäßen Ballaststoffes.

Gemäß einem Merkmal der Erfindung kann vorgesehen sein, dass das Verfahren die folgende Schritte umfasst:
(a) Reinigen der Komponenten des Ballaststoffes, die aus der aus Rindenmaterial von Harthölzern, Rindenmaterial von Weichhölzern, Lärchenholz, Weichhölzern, Harthölzern und Mischungen davon bestehenden Gruppe ausgewählt sind, und Entfernen von Fremdanteilen,
(b) Trocknen der Komponenten auf einen Trockensubstanzgehalt von etwa 3 bis 12%,
(c) Zerkleinern der Komponenten und gegebenenfalls Aussiebung auf eine gewünschte Partikelgröße,
(d) Kompaktieren der einzelnen Komponenten,
(e) Krümeln der Komponenten in einem Krümler auf die gewünschte Partikelgröße und anschließend Vermischen der Komponenten.

Gemäß einem weiteren Merkmal der Erfindung kann vorgesehen sein, dass vor dem Kompaktieren im Schritt (d) mindestens einer der Komponenten ein isochinolinalkaloidhaltiges Pflanzenmaterial beigemischt oder auf mindestens eine der Komponenten ein isochinolinalkaloidhaltiger Extrakt aufgesprüht wird.

Gemäß einem weiteren Merkmal der Erfindung kann vorgesehen sein, dass beim Vermischen der gekrümelten Komponenten im Schritt (e) ein isochinolinalkaloidhaltiges Pflanzenmaterial beigemischt oder ein isochinolinalkaloidhaltiger Extrakt aufgesprüht wird.

Gemäß einem weiteren Merkmal der Erfindung kann vorgesehen sein, dass das Verfahren folgende Schritte umfasst:
(i) Reinigen der Komponenten des Ballaststoffes, die aus der aus Rindenmaterial von Harthölzern, Rindenmaterial von Weichhölzern, Lärchenholz, Weichhölzern, Harthölzern und Mischungen davon bestehenden Gruppe ausgewählt sind, und Entfernen von Fremdanteilen,
(ii) Trocknen der Komponenten auf einen Trockensubstanzgehalt von etwa 3 bis 12%,
(iii) Zerkleinern der Komponenten und gegebenenfalls Aussiebung auf eine gewünschte Partikelgröße,
(iv) Vermischen der zerkleinerten und gegebenenfalls gesiebten Komponenten,
(v) Kompaktieren der Mischung und anschließend Krümeln in einem Krümler auf die gewünschte Partikelgröße.

Gemäß einem weiteren Merkmal der Erfindung kann vorgesehen sein, dass beim Vermischen der Komponenten im Schritt (iv) ein isochinolinalkaloidhaltiges Pflanzenmaterial beigemischt oder ein isochinolinalkaloidhaltiger Extrakt aufgesprüht wird.

Gemäß einem weiteren Merkmal der Erfindung kann vorgesehen sein, dass der gekrümelten Mischung aus Schritt (v) ein isochinolinalkaloidhaltiges Pflanzenmaterial beigemischt oder ein isochinolinalkaloidhaltiger Extrakt darauf aufgesprüht wird.

Gemäß einer weiteren Ausgestaltung der Erfindung kann ein Futtermittel vorgesehen sein, das einen Ballaststoff, wie er oben definiert wurde, enthält. Das Futtermittel enthält mindestens eine Futterkomponente, die aus der aus Proteinträger, Kohlenhydratträger, Raufutter, Grünfutterkonserven (Silagen), Fetten, Vitaminen, Mineralstoffen und Spurenelementen bestehenden Gruppe ausgewählt ist. Als Beispiele für Kohlenhydratträger kann man Getreide, Getreideprodukte, Mais und dergleichen nennen. Als Beispiele für Proteinträger kann man Tiermehle, Sojaprodukte, Milchproteine, Rapsprodukte, wie etwa Rapskuchen oder Rapsschrot, und dergleichen nennen. Als Beispiele für Raufutter, die beispielsweise in Futtermitteln für Wiederkäuer, Nagetiere und Hasenartige enthalten sind, kann man Heu, Stroh und dergleichen nennen, weiters sämtliche Silagearten.

Der Gehalt an erfindungsgemäßem Ballaststoff in dem Futtermittel kann in einem weiten Bereich variieren. Erfindungsgemäß kann vorgesehen sein, dass in dem Futtermittel 0,01 bis 50 Gew.-% Ballaststoff, bezogen auf das Gesamtgewicht des Futtermittels, enthalten sind.

Gemäß einem weiteren Merkmal der Erfindung kann ein Futtermittelzusatz zur Herstellung eines Futtermittels, wie es oben definiert ist, vorgesehen sein, wobei der Futtermittelzusatz einen erfindungsgemäßen Ballaststoff enthält.

Gemäß einem weiteren Merkmal der Erfindung kann eine Futtermittelvormischung zur Herstellung eines Futtermittels, wie es oben definiert ist, vorgesehen sein, wobei die Futtermittelvormischung einen erfindungsgemäßen Ballaststoff enthält. Zu den Futtermittelvormischungen zählen auch die Ergänzungsfuttermittel. In solchen Futtermittelvormischungen oder Ergänzungsfuttermitteln können bis zu >99% erfindungsgemäßen Ballaststoff enthalten sein.

Erfindungsgemäß kann vorgesehen sein, dass das Futtermittel beziehungsweise der Futtermittelzusatz oder die Futtermittelvormischung zur Herstellung eines Futtermittels einen isochinolinalkaloidhaltigen Ballaststoff gemäß der vorliegenden Erfindung zur Appetitreduktion, zur Erhöhung des Sättigungsreizes und gegebenenfalls zur Gewichtsreduktion enthält.

Der erfindungsgemäße Ballaststoff kann entweder in pulverförmiger, granulierter oder gekrümelter Form in ein übliches Tierfutter eingemischt werden. Der Ballaststoff kann auch in Form eines Kauartikels, z.B. Kauknochens, ausgeführt werden. Dabei kann der erfindungsgemäße Ballaststoff allein oder zusammen mit üblichen Futtermittelbestandteilen, wie Proteinträger, Kohlenhydratträger, Öle, Fette, Vitamin-, Mineralstoffträger, technische Hilfsstoffe etc., verwendet werden.

Die vorliegende Erfindung wird im Folgenden anhand von Beispielen detaillierter erläutert.

### Beispiel 1: Herstellung eines erfindungsgemäßen Ballaststoffes

Als Rohmaterial werden Kiefernrinde, Lärchenholz und Fichtenholz oder Kiefernholz oder eine Mischung von Fichten- und Kiefernholz in einem Mengenverhältnis von ca. 30% Kiefernrinde, ca. 20% Lärchenholz und ca. 50% Fichtenholz oder Kiefernholz oder Fichtenholz-Kiefernholz-Mischung verwendet. Die Rohmaterialien werden gereinigt und von Fremdanteilen befreit, anschließend auf einen Trockensubstanzgehalt von 10% getrocknet und zerkleinert. Gegebenenfalls kann eine Absiebung auf eine gewünschte Korngröße erfolgen. Danach werden die einzelnen Komponenten kompaktiert, dann in einem Krümler auf die gewünschte Partikelgröße gekrümelt und anschließend miteinander vermischt.

Alternativ können die vermahlenen Ausgangskomponenten vor der Kompaktierung miteinander vermischt werden.

Gegebenenfalls wird ein isochinolinalkaloidhaltiger Extrakt aufgesprüht oder isochinolinalkaloidhaltiges Pflanzenmaterial beigemischt. Eine lösliche Form des Extraktes kann auch abschließend auf das fertige Produkt aufgesprüht werden.

### Beispiel 2: Herstellung eines erfindungsgemäßen Ballaststoffes

Fichtenholz oder eine Fichtenholz-Kiefernholz-Mischung wird mit Kiefernrinde in einem Mischungsverhältnis von 1:1 verwendet. Die Verarbeitung erfolgt wie im Beispiel 1.

### Beispiel 3: Herstellung eines Ballaststoffes (Vergleichsbeisplel)

Als Rohmaterial wird 100% Kiefernrinde verwendet. Die Verarbeitung erfolgt wie im Beispiel 1.

### Beispiel 4: Bevorzungte Formulierungen des erfindungsgemäßen Ballaststoffes:

### Formulierung 1:

Das Produkt besteht zu 50% aus Fichten- oder Kiefernholz oder einer Mischung daraus, zu 30% aus Kiefernrinde und zu 20% aus Lärchenholz.

Die Hölzer und die Rinde werden beispielsweise wie folgt vermahlen: 0% der Partikel > 0,28 mm, 4-8% der Partikel > 0,20 mm, 52-68% der Partikel > 0,08 mm, 20-32% der Partikel < 0,08 mm.

Die Komponenten werden vermischt und anschließend als mehliges Produkt eingesetzt.

### Formulierung 2:

Die Anteile an Rinden und Hölzern ist wie bei der Formulierung 1.

Die Bestandteile der Formulierung werden kompaktiert und anschließend gekrümelt, wobei es gleichgültig ist, ob die Komponenten vor oder nach der Kompaktierung oder auch erst am Schluss des Produktionsvorganges, d.h. in bereits gekrümelter Form vermischt werden.

Das kompaktierte und gekrümelte Produkt kann beispielsweise folgende Partikelgrößenverteilung aufweisen: 0 % der Partikel > 2,0 mm, 60-63% der Partikel >1,0 mm, 32-34% der Partikel > 0,5 mm, 5-7% der Partikel < 0,5 mm.

### Formulierung 3:

Die Anteile an Rinden und Hölzern ist wie bei der Formulierung 1.

Die Bestandteile der Formulierung werden kompaktiert und anschließend gekrümelt. Die Komponenten können vor oder nach der Kompaktierung oder auch erst am Schluss des Produktionsvorganges, d.h. in bereits gekrümelter Form, vermischt werden.

Das kompaktierte und gekrümelte Produkt kann beispielsweise folgende Partikelgrößenverteilung aufweisen: 0% der Partikel > 8,0 mm, 78-83% der Partikel > 3,15mm, 15-18% der Partikel > 2,0 mm, 0-1% der Partikel < 2,0mm.

Die drei Formulierungen des erfindungsgemäßen Ballaststoffes können beispielsweise einen Feuchtigkeitsgehalt von 8,5-9,3% aufweisen. Alle drei Formulierungen zeichnen sich weiters dadurch aus, dass sie ein Flüssigkeitsbindungsvermögen aufweisen, das mindestens dem 5-fachen ihres Eigengewichtes entspricht. Weiters weisen alle drei Formulierungen einen Gehalt von 85% an *total dietary fibre* (tdf = Gesamtnahrungsfaser) auf.

Der beschriebene, sehr hohe Gehalt an *total dietary fibre* (tdf) ist aus emährungsphysiologischer Sicht besonders günstig und kann in dieser Form mit keinem der beim Stand der Technik bekannten Ballaststoffträger erreicht werden. Beim Stand der Technik geht der Fachmann davon aus, dass Faserformulierungen auf Basis Lignocellulose bei Tieren mit einhöhligem Magen nicht oder nur geringgradig im Verdauungstrakt fermentiert werden. Es ist daher überraschend, dass erfindungsgemäße Ballaststoff-Formulierungen aus lignocellulosehaltigem Material in den genannten erfindungsgemäßen Kombinationen im Verdauungstrakt fermentiert werden und zu einer massiven Bildung von organischen Säuren, insbesondere Milchsäure, führen, welche weit über den Werten von üblichen Rohfaserträgem liegen.

### Beispiel 5: Milchsäurebildungsvermögien erfindungsgemäßer Ballaststoffe

Im Rahmen eines Versuchs wurden verschiedene Formulierungen des erfindungsgemäßen Ballaststoffes mit Blinddarminhalt von Geflügel in einem *in vitro* Versuchssystem inkubiert und der Einfluss verschiedener Faserprodukte auf das Milchsäurebildungsvermögen, die Bildung flüchtiger Fettsäuren und andere Parameter erhoben. In dieser Untersuchung konnte erwartungsgemäß festgestellt werden, dass herkömmliche auf Lignocellulose basierende Produkte kaum zu einer Bildung von Milchsäure führen, weswegen sie, wie dem Fachmann bekannt, als schwer oder nicht fermentierbare Faserstoffe gelten.

Überraschenderweise haben die Ergebnisse mit verschiedenen erfindungsgemäßen Ballaststoffformulierungen eine Erhöhung der Milchsäureproduktion um bis zum beinahe 30-fachen Wert im Vergleich zu herkömmlichen Lignocellulose-Produkten gezeigt. Die Ergebnisse sind in der nachstehenden Tabelle 1 zusammengefasst:

**Tabelle 1**

| | Durchschnittsmesswerte D-Laktat in mg/l | Fermentation - D-Laktatbildung in mg/l (Messwert minus Nullwert) |
|---|---|---|
| Nullwert | 2,25 | |
| Lignocellulose | 3,85 | 1,60 |
| Zusammensetzung 1* | 21,90 | 19,65 |
| Zusammensetzung 2* | 47,10 | 44,85 |
| Zusammensetzung 3* | 48,50 | 46,25 |
| Zusammensetzung 4* | 34,50 | 32,25 |
| Futter | 14,00 | 11,75 |
| Maisstärke | 31,90 | 29,65 |
| Rübenschnitten | 8,52 | 6,27 |
| Citrus Fibre | 9,32 | 7,07 |
| Fruchtfaser 1 | 16,50 | 14,25 |
| Fruchtfaser 2 | 3,07 | 0,82 |

| | | |
|---|---|---|
| * Zusammensetzung 1: erfindungsgemäßer Ballaststoff, der Lärchenholz + Lärchenrinde enthält; Zusammensetzung 2: Ballaststoff, der Kiefernrinde enthält; Zusammensetzung 3: erfindungsgemäßer Ballaststoff, der Hartholz + Hartholzrinde enthält; Zusammensetzung 4: erfindungsgemäßer Ballaststoff, der 20% Lärchenholz + 30% Kiefernrinde + 50% Fichtenholz + Kiefernholz enthält. | | |

Aus emährungsphysiologischer Sicht ist die gebildete Milchsäure von großer Bedeutung, da sie zu einer Schutzwirkung gegenüber bestimmten, insbesondere pathogenen, Keimen im Darmlumen führt. Ein besonders wichtiger Effekt des erfindungsgemäßen Ballaststoffes ist darauf zurückzuführen, dass lignocellulosehaltige Substanzen durch ihre Adsorptivwirkung zu einer Oberflächenanlagerung von beispielsweise pathogenen Keimen führen, welche durch die lokale, im Ballaststoffpartikel erhöhte Milchsäureproduktion inaktiviert oder in ihrer Vermehrung gehemmt werden können. Beispielsweise legen sich Bakterien wie Colibakterien, Clostridien etc. an die Ballaststoffpartikel an. Durch den fermentierbaren Anteil des Materials werden speziell die Milchsäurebakterien gefördert. Sie bilden dabei Milchsäure, und diese Milchsäure umgibt die Ballaststoffpartikel. Damit ergibt sich ein sehr begrenzter Milchsäurehof rund um die Partikel, sodass die dort angelagerten pathogenen oder schädlichen Keime bekämpft werden. Dieser besonders vorteilhafte Effekt der vorliegenden Erfindung ist bei den Ballaststoffen des Standes der Technik nicht zu beobachten.

Desweiteren sind lignocellulosehaltige Substanzen Adsorbentien für verschiedene Schadstoffe, insbesondere Ammoniak. Dieses Ammoniak wird nach seiner Anlagerung durch den lokalen Einfluss der Säure zum ungiftigen Ammoniumion umgebildet. Das ist von erheblicher Bedeutung für den allgemeinen tierischen Gesundheitszustand, für die Darmgesundheit im Besonderen, aber auch für das allgemeine Stallklima.

### Beispiel 6: Zusammensetzung eines bevorzugten erfindungsgemäßen Ballaststoffes

Die Analyse des erfindungsgemäßen Ballaststoffes, der 20% Lärchenholz, 30% Kiefernrinde und 50% Fichtenholz + Kiefemholz enthält (Formulierung 1 im Beispiel 4, "Zusammensetzung 4" der Tabelle 1 des Beispiels 5), ergibt die in der folgenden Tabelle 2 angeführte Produktspezfikation (Angaben in %):

**Tabelle 2**

| | |
|---|---|
| Rohfaser | 53 ± 2 |
| TDF (Gesamtnahrungsfaser) | 85 ± 2 |
| ADL (Säure-Detergentien-Lignin) | 30 ± 2 |
| Rohprotein | 1,0 |
| Rohasche | 1,6 |
| Rohfett | 0,7 |
| Feuchtigkeit | 9 ± 1 |

Die erfindungsgemäße Ballaststoff-Faserformulierung ist eine aus ernährungsphysiologischer Sicht günstige Kombination fermentierbarer und schwer oder nicht fermentierbarer Fasersubstanzen, die einerseits dazu führt, dass durch den Anteil an unfermentierbarer Faser der Fermentationsprozess des fermentierbaren Nahrungsanteiles in Regionen des Darmlumens verschoben wird, wo die produzierten flüchtigen Fettsäuren, insbesondere die Buttersäure, vor allem für den Energlestoffwechsel des Darmepithels und für die Wasserrückresorption herangezogen werden kann und nicht nur durch Resorption dem Körper als Energieträger zur Verfügung steht. Versuche mit dem erfindungsgemäßen Ballaststoff haben gezeigt, dass es zu einer Optimierung der Wasserrückresorption im Darmlumen kommt und damit zu einem erhöhten Trockensubstanzgehalt des Kotes.

Im Rahmen der Durchfallprophylaxe beim Ferkel ist eine deutliche Verbesserung der

Kotkonsistenz zu sehen. Im Vergleich zu herkömmlichen Formulierungen aus Lignocellulose führt die erfindungsgemäße Faserformulierung zu einer weiteren Verbesserung der Wirksamkeit, die sich einerseits in einer verbesserten Kottrockensubstanz durch eine Optimierung der Wasserrückresorption ausdrückt - dies ist besonders bei Ferkeln und Geflügel von Bedeutung -, oder aber in einem optimierten Sättigungsreiz bei Sauen oder auch Heimtieren wie Hunden und Katzen, der auch schon in niedrigeren Konzentrationen als bei den herkömmlichen Lignocelluloseprodukten erreicht werden kann. Des weiteren führt die verminderte Produktion von Ammoniak zu einem geringeren Entzündungsgeschehen im Colon, was sich ebenfalls positiv auf die Wasserrückresorption auswirkt (eine geschädigte Schleimhaut kann nicht ausreichend Wasser resorbieren) und insgesamt einen positiven Effekt auf die Gesundheit der Tiere hat. Zusätzlich erschwert die beschleunigte Colonpassage das Aufsteigen von pathogenen Keimen in den Dünndarm.

Im Rahmen von umfangreichen Studien bei Broilern und Puten konnte ein deutlich positiver Einfluss auf den Kottrockensubstanzgehalt festgestellt werden. Der Kottrockensubstanzgehalt der Versuchsgruppe war im Vergleich zur Kontrollgruppe in einzelnen Mastabschnitten um bis zu 20% höher. Dies wirkte sich verständlicherweise positiv auf die Einstreuqualität und in der Folge auf das allgemeine Gesundheitsgeschehen aus. Bei diesen Praxisstudien wurden erhebliche Einsparungen im Bereich der Therapie- und Einstreukosten erzielt.

Das erfindungsgemäße Futter hat im Speziellen auch bei der Zuchtsau eine große Bedeutung, da hier aus Gründen der MMA- (Metritis-Mastitis-Agalaktie) Prophylaxe die Futteraufnahme begrenzt, der Sättigungsreiz des Tieres aber befriedigt werden sollte. Dies wird herkömmlicherweise durch die vermehrte Gabe von Rohfaser erreicht, in letzter Zeit auch häufig mit Rohfaserformulierungen auf Basis von Lignocellulose. Die übliche Dosierung für Lignocellulose-Produkte in der Sattfütterung bei der Zuchtsau liegen bei etwa 4-5%. Diese notwendigen hohen Dosierungen sind weder aus ökonomischer Sicht befriedigend noch aus ernährungsphysiologischer Sicht, da dies zu einer verminderten Aufnahme anderer wichtiger Nährstoffe führt. Interessanterweise konnte mit dem erfindungsgemäßen Ballaststoff, insbesondere aber mit einer Formulierung mit einem hohen Anteil an Kiefernrinde oder Kiefernrinde alleine, eine signifikante Verbesserung des Sättigungsreizes schon bei deutlich niedrigeren Dosierungen als der angeführten 4-5% der herkömmlichen Lignocellulose-Produkte erreicht werden. Dies ist vermutlich auf die kombinierte Wirkung des erfindungsgemäßen Ballaststoffes zurückzuführen, da wahrscheinlich die gebildete Milchsäure aufgrund ihres Gehalts an Wasserstoffionen zu einer Optimierung des Sättigungsreizes führt.

### Beispiel 7: Fütterungsempfehlungen für den erfindungsgemäßen Ballaststoff aus Beispiel 6

Die nachstehende Tabelle 3 gibt Beispiele für den Gehalt an erfindungsgemäßem Ballaststoff aus Beispiel 6 im Futter bei der Fütterung verschiedener Nutztiere.

**Tabelle 3**

| | |
|---|---|
| (Angaben des Ballaststoffgehalts in % der Ration) Tragende Zuchtsauen: rationierte Fütterung | 2-3 |
| Sattfütterung (ad lib.) | 2-5 |
| Mastschweine | 0,5-1,5 |
| Ferkel | 1-2 |
| Broiler | 0,5-1,5 |
| Puten | 1-2 |
| Kaninchen | 2-5 |

Die nachstehende Tabelle 4 zeigt ein Rationsbeispiel mit dem erfindungsgemäßen Ballaststoff aus Beispiel 6 in der Ferkelaufzucht:

**Tabelle 4**

| | |
|---|---|
| 4% | Mineral/Wirkstoffmischung |
| 22% | Sojaschrot |
| 24,5% | Gerste |
| 15% | Weizen |
| 28% | Mais |
| 5% | Molkenfettkonzentrat |
| 1,5% | erfindungsgemäßer Ballaststoff |

Die nachstehende Tabelle 5 zeigt ein Rationsbeispiel mit dem erfindungsgemäßen Ballaststoff aus Beispiel 6 in einem Futter für tragende Zuchtsauen.

**Tabelle 5**

| | |
|---|---|
| 39% | Gerste |
| 10% | Mais |
| 10% | Weizen |
| 11 % | Raps- oder Sonnenblumenschrot |
| 15% | Weizenfuttermehl |
| 5% | Weizenkleie |
| 5% | Trockenschnitte |
| 3% | Mineral-/Wirkstoffmischung |
| 2% | erfindungsgemäßer Ballaststoff |

Die nachstehende Tabelle 6 zeigt ein Rationsbeispiel mit dem erfindungsgemäßen Ballaststoff aus Beispiel 6 in einem Futter für Mastschweine.

**Tabelle 6**

| | |
|---|---|
| 60% | Ganzkornsilage bzw. Körnermaissilage |
| 17,5% | Weizen |
| 18% | Sojaschrot |
| 3% | Mineral-/Wirkstoffmischung |
| 1,5% | erfindungsgemäßer Ballaststoff |

Die nachstehende Tabelle 7 zeigt ein Rationsbeispiel mit dem erfindungsgemäßen Ballaststoff aus Beispiel 6 in einem Futter für Kaninchen.

**Tabelle 7**

| | |
|---|---|
| 20% | Luzernegrünmehl |
| 10% | Sonnenblumenschrot |
| 15% | Sojaschrot |
| 30% | Gerste |
| 3% | Mineral-/Wirkstoff |
| 10% | Weizenkleie |
| 8% | Weizenfuttermehl |
| 4% | erfindungsgemäßer Ballaststoff |

Die nachstehende Tabelle 8 zeigt ein Rationsbeispiel mit dem erfindungsgemäßen Ballaststoff aus Beispiel 6 in einem Futter für die Broilermast.

**Tabelle 8**

| | |
|---|---|
| 50% | Mais |
| 9% | Weizen |
| 32% | Sojaschrot |
| 3% | Mineral-/Wirkstoffmischung |
| 5% | Öl/Fett |
| 1 % | erfindungsgemäßer Ballaststoff |

Die nachstehende Tabelle 9 zeigt ein Rationsbeispiel mit dem erfindungsgemäßen Ballaststoff aus Beispiel 6 in einem Beifutter für Mastkälber.

### Tabelle 9

99% angemischte Milchaustauscher-Tränke für Kälber
1 % erfindungsgemäßer Ballaststoff

Gemäß einer weiteren Ausgestaltung der Erfindung kann vorgesehen sein, dass der erfindungsgemäße Ballaststoff als Nahrungsmittelzusatz in der menschlichen Ernährung verwendet wird. Der erfindungsgemäße Ballaststoff kann insbesondere in diätetischen Nahrungsmitteln enthalten sein. Die Verwendung des erfindungsgemäßen Ballaststoffes in einem Lebensmittel kann beispielsweise eine Appetitreduktion und/oder eine Erhöhung des Sättigungsreizes mit sich bringen und daher eine Gewichtsreduktion unterstützen.

## Patentansprüche

1. Ballaststoff zur Nahrungsergänzung für Monogastrier einschließlich des Menschen, **gekennzeichnet durch** eine ligriocellulosehaltige Faserformulierung, die fermentierbare Fasersubstanz und schwer oder nicht fermentierbare Fasersubstanz in einem Verhältnis zwischen 1:100 und 100:1 aufweist, wobei die Faserformulierung
- schwer oder nicht fermentierbare Fasersubstanz, die aus Weichholz, Hartholz und Mischungen davon ausgewählt ist, und
- fermentierbare Fasersubstanz, die aus Rindenmaterial von Weichhölzern, Rindenmaterial von Harthölzern oder Mischungen davon ausgewählt ist,
enthält.

2. Ballaststoff nach Anspruch 1, **dadurch gekennzeichnet, dass** er schwer oder nicht fermentierbare Fasersubstanz von Weichholz, das aus der aus Fichtenholz, Kiefern-holz, Lärchenholz und deren Mischungen bestehenden Gruppe ausgewählt ist, und fermentierbare Fasersubstanz von Rindenmaterial, das aus der aus Rindenmaterial von Weichhölzern, Rindenmaterial von Harthölzern und deren Mischungen bestehenden Gruppe ausgewählt ist, enthält.

3. Ballaststoff nach Anspruch 2, **dadurch gekennzeichnet, dass** er fermentierbare Fasersubstanz von Rindenmaterial von Kiefernarten enthält.

4. Ballaststoff nach Anspruch 1, **dadurch gekennzeichnet, dass** er schwer oder nicht fermentierbare Fasersubstanz von einer Mischung von Lärchenholz und anderen Weichhölzern, vorzugsweise ausgewählt aus der aus Fichtenholz, Kiefemholz und Mischungen davon bestehenden Gruppe, enthält.

5. Ballaststoff nach einem der Ansprüche 1, **dadurch gekennzeichnet, dass** er schwer oder nicht fermentierbare Fasersubstanz von mindestens einem Hartholz, das vorzugsweise aus der aus Buche, Pappel, Birke und deren Mischungen bestehenden Gruppe ausgewählt ist, enthält.

6. Ballaststoff nach Anspruch 1, **dadurch gekennzeichnet, dass** er schwer oder nicht
fermentierbare Fasersubstanz von Lärchenholz und mindestens einem Hartholz, vorzugsweise ausgewählt aus der Gruppe bestehend aus Buche, Pappel, Birke und deren Mischungen, enthält.

7. Ballaststoff nach einem der Ansprüche 1 bis 6, **dadurch gekennzeichnet, dass** er Isochinolinalkaloide, vorzugsweise Benzophenanthridinalkaloide, enthält.

8. Ballaststoff nach Anspruch 7, **dadurch gekennzeichnet, dass** die Isochinolinalkaloide in Form von Pflanzenmaterialien, wie Rhizomen, Blätter, Stängel, oder als Extrakte aus solchen Pflanzenmaterialien oder als Salze oder Derivate isolierter Isochinolinalkaloide oder in Form der synthetischen Analoga enthalten sind.

9. Ballaststoff nach Anspruch 7 oder 8, **dadurch gekennzeichnet, dass** die Isochinolinalkaloide in Form von Pflanzenmaterialien und/oder in Form von Extrakten aus Pflanzenmaterialien von Papaveraceae, vorzugsweise ausgewählt aus der aus *Sanguinaria canadensis, Macleaya cordata, Chelidonium majus, Hydrastis canadensis* und deren Mischungen bestehenden Gruppe, enthalten sind.

10. Ballaststoff nach einem der Ansprüche 7 bis 9, **dadurch gekennzeichnet, dass** Sanguinarin und Chelerythrin, vorzugsweise in einem Verhältnis von etwa 2:1, enthalten sind.

11. Ballaststoff nach einem der Ansprüche 7 bis 10, **dadurch gekennzeichnet, dass** Sanguinarin in einer Menge von 0,00001 Gew.-% bis 50 Gew.-%, bezogen auf das Gesamtgewicht des Ballaststoffes, enthalten ist.

12. Verfahren zur Herstellung eines Ballaststoffes gemäß einem der Ansprüche 1 bis 11, **gekennzeichnet durch** folgende Schritte:
(a) Reinigen der Komponenten des Ballaststoffes und Entfernen von Fremdanteilen,
(b) Trocknen der Komponenten auf einen Trockensubstanzgehalt von etwa 3 bis 12%
(c) Zerkleinern der Komponenten und gegebenenfalls Aussiebung auf eine gewünschte Partikelgröße, und entweder
(d1) Kompaktieren der Komponenten, Krümeln der Komponenten auf die gewünschte Partikelgröße und anschließend Vermischen der Komponenten,
oder
(d2) Vermischen der zerkleinerten und gegebenenfalls gesiebten Komponenten, Kompaktieren der Mischung und anschließend Krümeln auf die gewünschte Partikelgröße.

13. Verfahren nach Anspruch 12, **dadurch gekennzeichnet, dass** ein Isochinolinalkaloide enthaltender Ballaststoff hergestellt wird, indem im Schritt (d1) vor dem Kompaktieren mindestens einer der Komponenten ein isochinolinalkaloidhaltiges Pflanzenmaterial beigemischt oder auf mindestens eine der Komponenten ein isochinolinalkaloidhaltiger Extrakt aufgesprüht wird und/oder beim Vermischen der gekrümelten Komponenten ein isochinolinalkaloidhaltiges Pflanzenmaterial beigemischt oder ein isochinolinalkaloidhaltiger Extrakt aufgesprüht wird.

14. Verfahren nach Anspruch 12, **dadurch gekennzeichnet, dass** ein Isochinolinalkaloide enthaltender Ballaststoff hergestellt wird, indem im Schritt (d2) beim Vermischen der Komponenten ein isochinolinalkaloidhaltiges Pflanzenmaterial beigemischt oder ein isochinolinalkaloidhaltiger Extrakt aufgesprüht wird und/oder dass der gekrümelten Mischung ein isochinolinalkaloidhaltiges Pflanzenmaterial beigemischt oder ein isochinolinalkaloidhaltiger Extrakt darauf aufgesprüht wird.

15. Futtermittel, das mindestens eine aus der aus Proteinträgem, Kohlenhydratträgem, Raufutter, Grünfutterkonserven (Silagen), Fetten, Vitaminen, Mineralstoffen und Spurenelementen bestehenden Gruppe ausgewählte Futterkomponente enthält, **dadurch gekennzeichnet, dass** es einen Ballaststoff gemäß einem der Ansprüche 1 bis 11 , vorzugsweise in einer Menge zwischen 0,01 und 50 Gew.-%, bezogen auf das Gesamtgewicht des Futtermittels, enthält.

16. Futtermittel nach Anspruch 15, **dadurch gekennzeichnet, dass** es einen isochinolinalkaloidhaltigen Ballaststoff gemäß einem der Ansprüche 7 bis 11 zur Appetitreduktion und/oder zur Erhöhung des Sättigungsreizes und/oder zur Gewichtsreduktion enthält.

17. Futtermittelzusatz zur Herstellung eines Futtermittels gemäß einem der Ansprüche 15 oder 16, **dadurch gekennzeichnet, dass** er einen Ballaststoff gemäß einem der Ansprüche 1 bis 11 enthält.

18. Futtermittelvormischung zur Herstellung eines Futtermittels gemäß einem der Ansprüche 15 oder 16, **dadurch gekennzeichnet, dass** sie einen Ballaststoff gemäß einem der Ansprüche 1 bis 11 in einer Menge bis zu >99% enthält.

19. Verwendung eines Ballaststoffes gemäß einem der Ansprüche 1 bis 11 als Nahrungsmittelzusatz in der menschlichen Ernährung und/oder als Futtermittelzusatz, insbesondere zur Gewichtsreduktion.

## Claims

1. Dietary fibre for diet supplementation for monogastrics including humans, **characterized by** a lignocellulosic fibre formulation which comprises fermentable fibre substance and fibre substance which is fermentable with difficulty or not at all in a ratio between 1:100 and 100:1, wherein the fibre formulation
- contains fibre substance which is fermentable with difficulty or not at all which is selected from softwood, hardwood and mixtures thereof, and
- fermentable fibre substance which is selected from bark material of softwoods, bark material of hardwoods or mixtures thereof.

2. Dietary fibre according to Claim 1, **characterized in that** it contains fibre substance which is fermentable with difficulty or not at all from softwood which is selected from the group consisting of spruce wood, pine wood, larch wood and mixtures thereof, and contains fermentable fibre substance from bark material which is selected from the group consisting of bark material from softwoods, bark material from hardwoods and mixtures thereof.

3. Dietary fibre according to Claim 2, **characterized in that** it contains fermentable fibre substance from bark material from pine species.

4. Dietary fibre according to Claim 1, **characterized in that** it contains fibre substance which is fermentable with difficulty or not at all from a mixture of larch wood and other softwoods, preferably selected from the group consisting of spruce wood, pine wood and mixtures thereof.

5. Dietary fibre according to Claim 1, **characterized in that** it contains fibre substance which is fermentable with difficulty or not at all from at least one hardwood which is preferably selected from the group consisting of beech, poplar, birch and mixtures thereof.

6. Dietary fibre according to Claim 1, **characterized in that** it contains fibre substance which is fermentable with difficulty or not at all from larch wood and at least one hardwood, preferably selected from the group consisting of beech, poplar, birch and mixtures thereof.

7. Dietary fibre according to any one of Claims 1 to 6, **characterized in that** it contains isoquinoline alkaloids, preferably benzophenanthridine alkaloids.

8. Dietary fibre according to Claim 7, **characterized in that** the isoquinoline alkaloids are present in the form of plant materials such as rhizomes, leaves, stalks, or as extracts from such plant materials, or as salts or derivatives of isolated isoquinoline alkaloids, or in the form of the synthetic analogues.

9. Dietary fibre according to Claim 7 or 8, **characterized in that** the isoquinoline alkaloids are present in the form of plant materials and/or in the form of extracts from plant materials of Papaveraceae, preferably selected from the group consisting of *Sanguinaria canadensis, Macleaya cordata, Chelidonium majus, Hydrastis canadensis* and mixtures thereof.

10. Dietary fibre according to any one of Claims 7 to 9, **characterized in that** sanguinarine and chelerythrine are present preferably in a ratio of about 2:1.

11. Dietary fibre according to any one of Claims 7 to 10, **characterized in that** sanguinarin is present in an amount of 0.00001% by weight to 50% by weight, based on the total weight of the dietary fibre.

12. Process for producing a dietary fibre according to any one of Claims 1 to 11, **characterized by** the following steps:
(a) cleaning the components of the dietary fibre and removing foreign portions,
(b) drying the components to a dry matter contient of about 3 to 12%
(c) comminuting the components and optionally sieving to a desired particle size, and either
(d1) compacting the components, crumbling the components to the desired particle size and then mixing the components,
or
(d2) mixing the comminuted and optionally sieved components, compacting the mixture and then crumbling it to the desired particle size.

13. Process according to Claim 12, **characterized in that** an isoquinoline alkaloid-containing dietary fibre is produced by, in step (d1) before the compacting, adding an isoquinoline alkaloid-containing plant material to at least one of the components, or spraying an isoquinoline alkaloid-containing extract onto at least one of the components, and/or during mixing of the crumbled components, adding an isoquinoline alkaloid-containing plant material or spraying on an isoquinoline alkaloid-containing extract.

14. Process according to Claim 12, **characterized in that** an isoquinoline alkaloid-containing dietary fibre is produced by, in step (d2), during mixing of the components, adding an isoquinoline alkaloid-containing plant material or spraying on an isoquinoline alkaloid-containing extract, and/or **in that** an isoquinoline alkaloid-containing plant material is added to the crumbled mixture or an isoquinoline alkaloid-containing extract is sprayed thereon.

15. Feedstuff which contains at least one feed component selected from the group consisting of protein carriers, carbohydrate carriers, roughage, preserved green fodder (silage), fats, vitamins, minerals and trace elements, **characterized in that** it contains a dietary fibre according to any one of Claims 1 to 11, preferably in an amount between 0.01 and 50% by weight, based on the total weight of the feedstuff.

16. Feedstuff according to Claim 15, **characterized in that** it contains an isoquinoline alkaloid-containing dietary fibre according to any one of Claims 7 to 11 for appetite reduction and/or for increasing the satiety stimulus and/or for weight reduction.

17. Feedstuff additive for producing a feedstuff according to either of Claims 15 or 16, **characterized in that** it contains a dietary fibre according to any one of Claims 1 to 11.

18. Feedstuff premix for producing a feedstuff according to either of Claims 15 and 16, **characterized in that** it contains a dietary fibre according to any one of Claims 1 to 11 in an amount of up to > 99%.

19. Use of a dietary fibre according to any one of Claims 1 to 11 as food additive in human nutrition and/or as feedstuff additive, in particular for weight reduction.

## Revendications

1. Substance lest de complément alimentaire pour monogastrique, y compris l'homme, **caractérisée par** une formulation de fibre contenant de la lignocellulose, qui comprend une substance de fibre fermentable et une substance de fibre non fermentable ou difficilement fermentable en un rapport compris entre 1:100 et 100:1, la formulation contenant
- de la substance de fibre non fermentable, ou difficilement fermentable, qui est choisie parmi du bois tendre, du bois dur et leurs mélanges, et
- de la substance de fibre fermentable, qui est choisie parmi du matériau d'écorce de bois tendre, du matériau d'écorce de bois dur ou leurs mélanges.

2. Substance lest suivant la revendication 1, **caractérisée en ce qu'**elle comprend de la substance de fibre non fermentable ou difficilement fermentable de bois tendre, qui est choisie dans le groupe constitué du bois d'épicéa, du bois de pin, du bois de mélèze et de à substance de fibre fermentable de matériau d'écorce, qui est choisie dans le groupe de matériau d'écorce de bois tendre, de matériau d'écorce de bois dur et leurs mélanges.

3. Substance lest suivant la revendication 2, **caractérisée en ce qu'**elle contient de la substance de fibre fermentable de matériau d'écorce de types de pin.

4. Substance lest suivant la revendication 1, **caractérisée en ce qu'**elle contient de la substance de fibre non fermentable ou difficilement fermentable d'un mélange de bois de mélèze et d'autres bois tendres choisis de préférence dans le groupe constitué par de l'épicéa, du bois de pin et leurs mélanges.

5. Substance lest suivant la revendication 1, **caractérisée en ce qu'**elle contient de la substance de fibre non fermentable ou difficilement fermentable d'au moins un bois dur, qui est choisi de préférence dans le groupe constitué du hêtre, du peuplier, du bouleau et leurs mélanges.

6. Substance lest suivant la revendication 1, **caractérisée en ce qu'**elle contient de la substance de fibre non fermentable ou difficilement fermentable de bois de mélèze et d'au moins un bois dur, de préférence choisi dans le groupe constitué du hêtre, du peuplier, du bouleau et leurs mélanges.

7. Substance lest suivant l'une des revendications 1 à 6, **caractérisée en ce qu'**elle contient des alcaloïdes d'isoquinoléine, de préférence des alcaloïdes de benzophénanthridine.

8. Substance lest suivant la revendication 7, **caractérisée en ce que** les alcaloïdes d'isoquinoléine sont contenus sous forme de matière végétale, comme des rhizomes, des feuilles, des tiges ou comme extraits de matière végétale de ce genre ou comme sels ou dérivés d'alcaloïdes d'isoquinoléine isolés ou sous la forme des analogues synthétiques.

9. Substance lest suivant la revendication 7 ou 8, **caractérisée en ce que** les alcaloïdes d'isoquinoléine sont contenus sous forme de matières végétales et/ou sous forme d'extraits de matière végétale de papavéracée, choisis de préférence dans le groupe constitué de *sanguinaria canadensis, macleaya cordata, chelidonium majus, hydrastis canadensis* et leurs mélanges.

10. Substance lest suivant l'une des revendications 7 à 9, **caractérisée en ce que** de la sanguinarine et de la chélérythrine sont contenues de préférence en un rapport de 2:1.

11. Substance lest suivant l'une des revendications 7 à 10, **caractérisée en ce que** de la sanguinarine est contenue en une quantité de 0,00001 % en poids à 50 % en poids rapportée au poids total de la substance lest.

12. Procédé de production d'une substance lest suivant l'une des revendications 1 à 11, **caractérisé par** les stades suivantes :
(a) on purifie les constituants de la substance lest et on élimine les parties étrangères,
(b) on sèche les constituants jusqu'â une teneur en substance sèche d'environ 3 à 12 %,
(c) on fragmente les constituants et, le cas échéant, on les tamise jusqu'à une granulométrie souhaitée et soit
(d1) on compacte les constituants, on émiette les constituants jusqu'à une granulométrie souhaitée et ensuite on mélange les constituants,
soit
(d2) on mélange les constituants fragmentés et, le cas échéant, tamisés, on compacte le mélange et ensuite on l'émiette jusqu'à la granulométrie souhaitée.

13. Procédé suivant la revendication 12, **caractérisé en ce qu'**on produit une substance lest contenant des alcaloïdes d'isoquinoléine en mélangeant au stade d1) avant le compactage une matière végétale contenant un alcaloïde d'isoquinoléine à au moins l'un des constituants ou on projette un extrait contenant un alcaloïde d'isoquinoléine sur au moins l'un des constituants et/ou lors du mélange des constituants émiettés on mélange une matière végétale contenant un alcaloïde d'isoquinoléine ou on projette un extrait contenant un alcaloïde d'isoquinoléine.

14. Procédé suivant la revendication 12, **caractérisé en ce qu'**on produit une substance lest contenant des alcaloïdes d'isoquinoléine en mélangeant au stade d2) lors du mélange des constituants une matière végétale contenant un alcaloïde d'isoquinoléine ou en projetant un extrait contenant un alcaloïde d'isoquinoléine et/ou en mélangeant une matière végétale contenant un alcaloïde d'isoquinoléine au mélange émietté ou en y projetant un extrait contenant un alcaloïde d'isoquinoléine.

15. Aliment pour animaux, qui contient au moins un constituant choisi dans le groupe constitué de sources de protéine, de source d'hydrate de carbone, de fourrage grossier, des réserves de fourrage vert (fourrage ensilé), des matières grasses, des vitamines, des substances minérales et des oligoéléments, **caractérisé en ce qu'**il contient une substance lest suivant l'une des revendications 1 à 11, de préférence en une quantité comprise entre 0,01 et 50 % en poids rapportée au poids total de l'aliment pour animaux.

16. Aliment pour animaux suivant la revendication 15, **caractérisé en ce qu'**il contient une substance lest contenant un alcaloïde d'isoquinoléine suivant l'une des revendications 7 à 11 pour la réduction de l'appétit et/ou pour l'augmentation de la stimulation au rassasiement et/ou pour la réduction de poids.

17. Additif d'aliment pour animaux pour la production d'un aliment pour animaux suivant l'une des revendications 15 ou 16, **caractérisé en ce qu'**il contient une substance lest suivant l'une des revendications 1 à 11.

18. Prémélange d'aliment pour animaux pour la production d'un aliment pour animaux suivant l'une des revendications 15 ou 16, **caractérisé en ce qu'**il contient une substance lest suivant l'une des revendications 1 à 11 en une quantité jusqu'à > 99 %.

19. Utilisation d'une substance lest suivant l'une des revendications 1 à 11, comme additif alimentaire dans l'alimentation humaine et/ou comme additif d'aliment pour animaux, notamment pour la réduction du poids.
